Europäisches Patentamt

**European Patent Office**

**Office européen des brevets**

(11) Numéro de publication: **0 283 417 B1**

## (12) FASCICULE DE BREVET EUROPEEN

(45) Date de publication de fascicule du brevet: **25.11.92**  (51) Int. Cl.⁵: **A61C 1/05,** F01D 15/06

(21) Numéro de dépôt: **88460005.7**

(22) Date de dépôt: **10.03.88**

(54) **Rotor à volant d'inertie de pièce à main dentaire à air avec son frein intermittent.**

(30) Priorité: **19.03.87 FR 8704030**
**26.03.87 FR 8704354**

(43) Date de publication de la demande:
**21.09.88 Bulletin  88/38**

(45) Mention de la délivrance du brevet:
**25.11.92 Bulletin  92/48**

(84) Etats contractants désignés:
**AT CH DE ES FR GB IT LI SE**

(56) Documents cités:
**CH-A- 402 279**
**US-A- 4 324 063**

(73) Titulaire: **Lambertin, Bernard**
**45, rue du Neufbourg**
**F-50000 Saint-Lo(FR)**

(72) Inventeur: **Lambertin, Bernard**
**45, rue du Neufbourg**
**F-50000 Saint-Lo(FR)**

(74) Mandataire: **Lemoine, Robert et al**
**Cabinet Malémont 42, Avenue du Président**
**Wilson**
**F-75116 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne un dispositif, dénommé rotor, qui permet de faire tourner, sous l'action de l'air canalisé sous pression, une fraise dentaire insérée dans la tête d'une pièce à main dentaire à air. La piéce à main à air est un instrument de pratique quotidienne dans l'art dentaire.

Dans l'état actuel de la technique (voir CH-A-402 279), le rotor ne posséde pas de volant d'inertie, ni de frein incorporé dans le corps d'une piéce à main à air, pour arrêter le rotor lors de l'interruption de l'arrivée d'air sous pression. Sans le volant d'inertie, le couple de rotation du rotor tend à diminuer lors de la taille de l'organe dentaire, ce qui diminue l'éfficacité de coupe et provoque ainsi un échauffement nuisible à la vitalité pulpaire de la dent. Sans volant d'inertie, les zones de réception d'air ne sont pas en forme de coin, mais légérement incurvées, ce qui diminue la prise d'air sous pression, donc le couple. Sans volant d'inertie, on ne peut décaler une rangée de zones unitaires de reception d'air par rapport à une autre rangée de zones unitaires de reception d'air d'une demi zone de reception d'air, ce qui rend le fonctionnement plus bruyant, le démarrage plus lent et le couple à plein régime moins régulier. Enfin l'absence de frein, incorporé dans le corps de la pièce à main, rend l'utilisation de celle-ci plus dangereuse; en effet, lors de mouvements malencontreux et subits, le patient risque d'être blessé car la fraise ne s'arrête pas immédiatement aprés l'interruption de l'arrivée d'air.

Le dispositif selon l'invention permet de remédier à ses inconvénients. Le dispositif se compose de deux parties. La première, tournant par rapport à son axe vertical: le rotor à volant d'inertie. La seconde, le frein qui en s'appliquant sur le volant d'inertie arrête le rotor. Ces deux parties sont comprises dans le corps de la piéce à main dentaire à air.

Le rotor a pour caractéristique de porter un volant d'inertie, qui peut être de différentes épaisseurs, situé à la périphérie des ailettes du rotor, perpendiculaire à son axe de rotation et divisant la zone de réception de l'air sous pression, en deux parties égales. La position de ce volant d'inertie, habituellement en position médiane, peut être positionné en différents points perpendiculairement à l'axe vertical de rotation. Il peut être en position haute, en position intermédiaire, en position basse, et en dehors de la zone des ailettes et même au niveau des paliers du rotor.

Selon une forme de réalisation préférentielle, le volant d'inertie se trouve en position médiane, perpendiculaire à l'axe de rotation, le volant permet d'obtenir avec les ailettes des zones unitaires de reception d'air en forme de coin: cette forme est plus éfficace pour propulser le rotor. En décalant, d'une demi unité de zone unitaire de reception d'air, les zones unitaires du haut par rapport aux zones unitaires du bas, séparées par le volant d'inertie, nous obtenons une structure extrémement éfficace pour le silence de fonctionnement par rapport aux rotors classiques. De plus, les zones de réception se succédant plus rapidement, nous obtenons une vitesse de démarrage plus rapide. Ensuite, pour canaliser l'air sous pression de façon plus efficace sur les zones de réception unitaires en forme de coin, nous divisons l'unique arrivée d'air habituelle en deux arrivées d'air, l'une supérieure et l'autre inférieure, par rapport au volant: nous obtenons des jets d'air plus concentrés sur leurs cibles. Nous pouvons disposer deux, quatre arrivées d'air ou plus en fonction des résultats recherchés.

Selon une forme de réalisation préférentielle, pour augmenter la prise de l'air sur le rotor et diminuer les sifflements lorsque l'air frappe le rotor, nous réalisons une alvéolisation de petite taille sur l'ensemble des surfaces recevant l'air: cage et rotor.

Ayant accru l'éfficacité de ce rotor, il est adjoint un frein à fonctionnement intermittent qui freine le rotor en s'appliquant sur le volant d'inertie: ce frein intermittent a un mécanisme de mobilisation compris dans le corps de la pièce à main à air. Ce frein peut être disposé de quelque façon que ce soit, pour agir à un endroit quelconque du volant d'inertie. Ce frein peut être mobilisé, de façon intermittente, par quelque mécanisme que ce soit, compris dans le corps de la piéce à main. Le nombre de mécanismes mobilisant le frein, de façon intermittente, n'est pas limité.

Selon une variante du dispositif, aux parties rotor à volant d'inertie/frein, il peut être adjoint d'autres mécanismes, comme par exemple un mécanisme de lubrification des paliers, un systéme de désinfection interne de la piéce à main, un systéme de production d'électricité etc...Le nombre des dispositifs pouvant être adjoints au rotor à volant d'inertie/frein n'est pas limité. Tout matériau ou combinaison de matériaux, tout traitement thermique, magnétique, chimique font partie de l'originalité du systéme.

Les dessins annexés illustrent l'invention:
La figure 1 représente le dispositif selon l'invention.
La figure 2 représente une variante de ce dispositif.
La figure 3 représente une zone unitaire de reception d'air agrandie.
La figure 4 représente le frein s'appliquant sur le volant d'inertie pour arrêter le rotor.

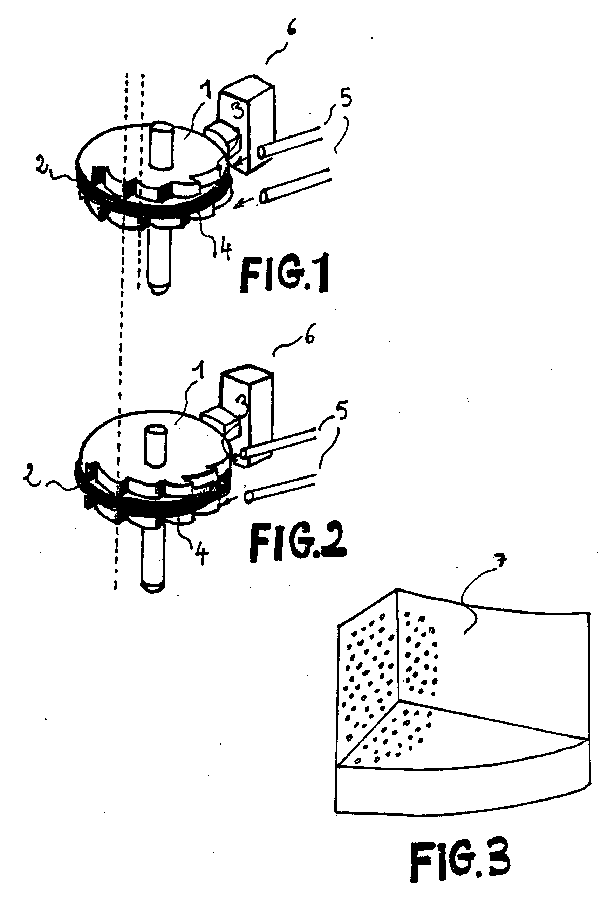

Le dispositif représenté sur la figure 1 comporte un rotor(1) avec son volant d'inertie (2) et la rangée de zones unitaires de reception d'air supérieure (3) décalée d'une demi zone de reception d'air par rapport à la rangée de zones unitaires de reception d'air inférieure (4). Sur ces deux rangées (3) et (4) arrive l'air canalisé par deux jets d'air (5) qui propulsent le rotor. Sur le volant d'inertie (2) s'applique le frein (6).

Le dispositif représenté sur la figure 2 comporte un rotor (1) avec son volant d'inertie (2) et la rangée de zones unitaires de reception d'air supérieur (3) coincide avec la rangée de zones unitaires de reception inférieure (4). Sur le volant d'inertie (2) s'applique le frein (6).

Le dispositif représenté sur la figure 3 cataloguée (7) est une zone unitaire de reception d'air en forme de coin.

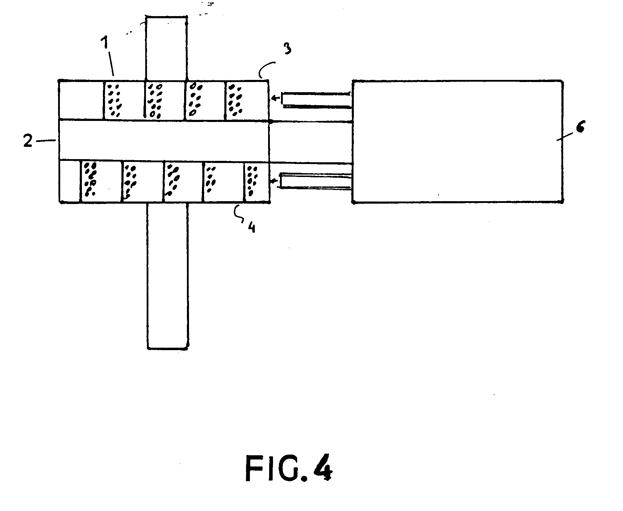

Le dispositif représenté par la figure 4 montre le frein (6) s'appliquant sur le volant d'inertie (2) du rotor (1) pour le freiner. Le dispositif selon l'invention est particuliérement utilisé dans l'art dentaire à l'intérieur du corps d'une piéce à main à air pour la taille de préparations sur les organes dentaires.

**Revendications**

1. Dispositif compris dans le corps de la piéce à main qui participe au fonctionnement d'une fraise dentaire fixée sur le rotor d'une piéce à main dentaire à air comportant un rotor (1) présentant un disque à la périphérie des ailettes de reception d'air, en position médiane ou autre, perpendiculaire à l'axe de rotation, déterminant de chaque coté du disque (2) une rangée de zones unitaires de reception d'air supérieure (3) et une rangée de zones unitaires inférieures (4) décalées,ou non, d'une demi unité de reception d'air l'une par rapport à l'autre sur lesquelles arrive l'air sous pression canalisé par une, deux, ou plusieurs sorties d'air (5) qui font tourner le rotor, caractérisé en ce que le disque est en forme d'un volant d'inertie (2) sur lequel s'appuie le frein intermittent (6).

2. Dispositif selon la revendication 1 caractérisé en ce que le volant d'inertie (2) constitue une partie du rotor (1).

3. Dispositif selon la revendication 1 ou la revendication 2 caractérisé en ce que la rangée de zones unitaires de reception d'air supérieure (3) est décalée, par rapport à la rangée de zones unitaires inférieure (4), d'une demi zone unitaire de reception d'air dans la réalisation préférentielle.

4. Dispositif selon l'une quelconque des revendications précédentes caractérisé en ce que les zones unitaires de reception d'air sont en forme de coin (7) et micro-alvéolisées comme le reste du rotor et sa cage.

5. Dispositif selon l'une des revendications 1 ou 2 caractérisé en ce quelle, les deux ou les jets d'air (5) arrivent sur les zones unitaires en coin (7) pour propulser le rotor (1).

6. Dispositif selon l'une quelconque des revendications précédentes caractérisé en ce que lorsque le volant d'inertie (2) n'est pas dans la zone des ailettes de reception d'air perpendiculaire à l'axe de rotation, les zones unitaires de reception ne sont pas en coin.

7. Dispositif selon l'une quelconque des revendications précédentes caractérisé par l'addition possible au mécanisme rotor (1) à volant d'inertie/frein (6) d'un sytéme de lubrification, de désinfection interne de la piéce à main, d'un dispositif de production d'électricité.

**Claims**

1. Device included in the body of the hand-tool and which participates in the functioning of a dentist's milling tool mounted on the rotor of a dentist's pneumatic hand-tool, comprising a rotor (1) having a disc at the periphery of the air reception vanes, in a median or other position, perpendicular to the axis of rotation, defining on either side of the disc (2) an upper row (3) of elementary air reception zones and a lower row (4) of elementary zones, staggered, or otherwise, by half an air reception unit in relation to one another, on which impinges the air under pressure, channelled by one, two or more air outlets (5) which cause the rotor to rotate, characterized in that the disc is in the form of an inertia flywheel (2) to which is applied the intermittent brake (6).

2. Device according to claim 1, characterized in that the inertia flywheel (2) forms part of the rotor (1).

3. Device according to claim 1 or claim 2, characterized in that the upper row (3) of elementary air reception zones is staggered, in relation to the lower row (4) of elementary zones, by half an elementary air reception zone in the preferred embodiment.

4. Device according to any one of the preceding claims, characterized in that the elementary air reception zones are in the shape of wedges (7) and micro-alveolated like the rest of the rotor and its housing.

**5.** Device according to one of claims 1 or 2, characterized in that the one, two or more jets of air (5) impinge on the wedge-shaped elementary zones (7) to propel the rotor (1).

**6.** Device according to any one of the preceding claims, characterized in that, when the inertia flywheel (2) is not in the air reception vane zone perpendicular to the axis of rotation, the elementary reception zones are not wedge-shaped.

**7.** Device according to any one of the preceding claims, characterized by the possible addition to the rotor mechanism (1) having an inertia flywheel and a brake (6) of a lubrication system, an internal hand-tool disinfection system, an electricity producing device.

**Patentansprüche**

**1.** Vorrichtung, die im Körper des Handstücks eingebaut ist und am Betrieb eines auf dem Rotor eines luftgetriebenen zahnärtzlichen Handstücks befestigten zahnärtzlichen Fräsers teilnimmt, mit einem Rotor (1), der am Außenrand der Luftaufnahmeflügel eine mittig oder sonstwie angeordnete, bezüglich der Drehachse senkrechte Scheibe (2) aufweist, die beidseitig eine obere Reihe (3) von Luftaufnahme-Grundzonen und eine untere Reihe (4) von Grundzonen bildet, die um eine halbe Luftaufnahme-Grundzone gegeneinander versetzt sind oder auch nicht, und auf welche die durch einen, zwei oder mehrere Luftaustritte (5) zugeführte Druckluft zufließt, die den Rotor drehen, dadurch gekennzeichnet, daß die Scheibe als Trägheitsrad (2) ausgestaltet ist, an dem sich die intermittierend wirkende Bremse (6) abstützt.

**2.** Vorrichtung nach Patentanspruch 1, dadurch gekennzeichnet, daß das Trägheitsrad (2) einen Teil des Rotors (1) darstellt.

**3.** Vorrichtung nach Patentanspruch 1 oder 2, dadurch gekennzeichnet, daß die obere Reihe (3) der Luftaufnahme-Grundzonen in der bevorzugten Ausführungsform gegen die untere Reihe (4) der Luftaufnahme-Grundzonen um eine halbe Grundzone versetzt ist.

**4.** Vorrichtung nach irgendeinem der vorhergehenden Patentansprüche, dadurch gekennzeichnet, daß die Luftaufnahme-Grundzonen keilförmig (7) und wie der übrige Rotor und dessen Gehäuse mikrozellig ausgebildet sind.

**5.** Vorrichtung nach einem der Patentansprüche 1 oder 2, dadurch gekennzeichnet, daß der Luftstrahl bzw. beide oder die Luftstrahlen (5) auf die keilförmigen Grundzonen (7) zufließen, um den Rotor (1) anzutreiben.

**6.** Vorrichtung nach irgendeinem der vorhergehenden Patentansprüche, dadurch gekennzeichnet, daß, wenn das Trägheitsrad (2) nicht im zur Drehachse senkrechten Bereich der Luftaufnahmeflügel liegt, die Aufnahme-Grundzonen nicht keilförmig sind.

**7.** Vorrichtung nach irgendeinem der vorhergehenden Patentansprüche, durch die Möglichkeit gekennzeichnet, dem Rotormechanismus (1) mit Trägheitsrad/Bremse (6) ein Schmiersystem, ein System zum inneren Desinfizieren des Handstücks, eine Vorrichtung zur Elektrizitätserzeugung zuzufügen.

**FIG.1**

**FIG.2**

**FIG.3**

FIG.4